# FASCICULE DE BREVET EUROPEEN

(11) **EP 3 792 201 B1**
(45) Date de publication et mention de la délivrance du brevet: **06.03.2024**
(21) Numéro de dépôt: 20196267.7
(22) Date de dépôt: 15.09.2020
(51) Int. Cl.: B65G 1/02, A47B 96/00, B21D 1/14, B21D 3/00, B23P 6/00, F16B 43/00

(54) **DISPOSITIF DE RENFORCEMENT DE RAYONNAGES NOTAMMENT DESTINÉ AU RENFORCEMENT MÉCANIQUE D'UN MONTANT DE RAYONNAGE À ÉQUIPER**
VORRICHTUNG ZUR VERSTÄRKUNG VON REGALEN, INSBESONDERE ZUR MECHANISCHEN VERSTÄRKUNG EINES AUSZUSTATTENDEN REGALPFOSTENS
DEVICE FOR REINFORCING SHELVING, IN PARTICULAR INTENDED FOR MECHANICAL REINFORCEMENT OF SHELVING TO BE INSTALLED

(30) Priorité: 16.09.2019 FR 1910217
(43) Date de publication de la demande: 17.03.2021
(73) Titulaire: Global Industrial Security Systems, 59650 Villeneuve-d'Ascq (FR)
(72) Inventeur: VALLERIE, Tanguy, 59100 ROUBAIX (FR)
(74) Mandataire: Ipside

(56) Documents cités:
- EP-A1- 2 214 534
- CN-A- 103 466 189
- DE-U1-202011 051 569
- DE-U1-202011 110 853
- JP-U- S5 133 656
- JP-U- S5 630 610
- KR-B1- 100 909 236
- US-A- 4 113 110

## Description

### Domaine technique

L'invention se situe dans le domaine technique de la réparation et/ou maintenance de rayonnages notamment dans des entrepôts de stockage et l'invention est principalement destinée à la réparation et au renforcement mécanique d'un montant de rayonnage endommagé.

Cette application n'est toutefois pas limitative et le dispositif de renforcement pourra également être utilisé pour le renforcement mécanique d'un montant non endommagé mais nécessitant un renfort pour permettre de supporter des charges accrues notamment en cas d'ajout d'un étage supplémentaire pour le rayonnage ou de réception de charges plus élevées qu'autorisées par le dimensionnement originel du rayonnage.

### Technique antérieure

Il est courant dans les entrepôts de stockage de rencontrer des problèmes de déformation des montants des rayonnages dus aux chocs engendrés par les chariots élévateurs et notamment par leurs fourches en cas de mauvaise manipulation des opérateurs. Pour éviter ces chocs on prévoit des barrières de sécurité mais toutes les installations ne sont pas équipées et l'ensemble des montants des rayonnages d'une même installation peut difficilement être protégé par des barrières.

Dans la pratique compte tenu du trafic important des chariots élévateurs, les incidents sont relativement nombreux et problématiques pour la gestion des flux. En effet, en cas de choc important, ou suite à une accumulation de chocs entraînant une déformation du montant, il y a un risque de rupture du montant et par conséquent de casse et d'écroulement du rayonnage. Pour éviter tout risque il est nécessaire, lors d'un choc, de remplacer le montant endommagé ce qui nécessite un démontage au moins partiel du rayonnage après retrait des matériels entreposés.

Pour remédier à cet inconvénient du démontage et du remplacement du montant endommagé, on connait une technique de pose d'un élément mécanique de renfort. Cet élément mécanique de renfort comporte des moyens de fixation sur le montant et vient enserrer ce dernier sur trois côtés. Cet élément mécanique permet à la fois de redresser le montant, lorsque l'angle de fléchissement de ce dernier est inférieur à une limite, et ensuite de le renforcer en laissant en permanence cet élément mécanique de renfort sur le montant.

Cet élément mécanique exerce une force très importante sur les parois au niveau des trous réalisés dans le montant et servant à la fixation de l'élément mécanique de renfort. Notamment, la force exercée est très importante lors du redressement du montant, et également en cas de nouveau choc, chaque nouveau choc étant transmis via l'élément de renfort directement au niveau des zones de fixation ce qui peut engendrer des ruptures ou des poinçonnements au niveau desdites zones.

US4113110A divulgue un dispositif de renforcement selon le préambule de la revendication 1.

La présente invention constitue un perfectionnement aux éléments mécaniques de renfort présents sur le marché.

### Résumé de l'invention

L'invention est définie dans la revendication 1.

La présente invention concerne un dispositif de renforcement de rayonnages notamment destiné au renforcement mécanique d'un montant de rayonnage à équiper comportant une structure profilée apte à permettre le renfort du montant, le dispositif de renforcement comprenant des moyens de fixation au montant et des moyens de répartition d'efforts pour limiter les efforts de charge au niveau des zones de fixation sur le montant.

### Avantages apportés

Un premier but de la présente invention est de résoudre tout ou partie des problèmes techniques liés à l'art antérieur précité.

Un autre but de la présente invention est de proposer un dispositif de renforcement permettant d'obtenir une réduction des charges, lors du redressement et lors de chocs ultérieurs, sur les zones de fixation entre le dispositif de renfort et le montant à équiper. Un autre but de la présente invention est de proposer un dispositif de renforcement permettant une installation rapide et fiable sur le montant à équiper.

Un autre but de la présente invention est de proposer un dispositif de fonctionnement dont la structure est adaptable permettant la transformation de dispositif de renforcement déjà commercialisés.

### Brève description des dessins

La présente invention sera mieux comprise à la lecture d'un exemple détaillé de réalisation en référence aux figures annexées, fournies à titre d'exemple non limitatif, parmi lesquels :
La figure 1 représente un exemple de réalisation en perspective d'un premier dispositif de renforcement sans les moyens de liaison,
La figure 2 représente l'exemple de réalisation de la figure 1 en vue arrière et comportant les moyens de liaison et les moyens de répartition de charge,
La figure 3 représente une vue en perspective d'une languette selon l'exemple de réalisation des figures 1 et 2.
La figure 4 représente un dispositif de renforcement disposé sur un montant de rayonnage.

### Description des modes de réalisation

La présente invention concerne un dispositif de renforcement 1 permettant le renforcement d'un montant de rayonnage.

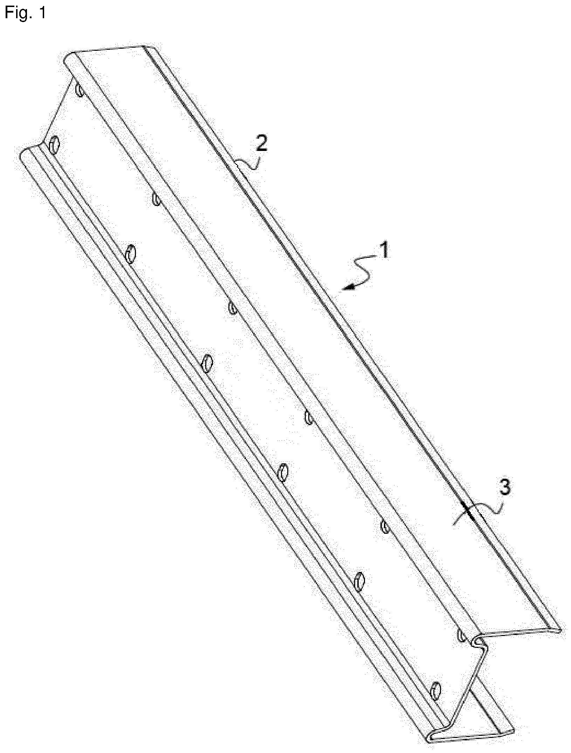

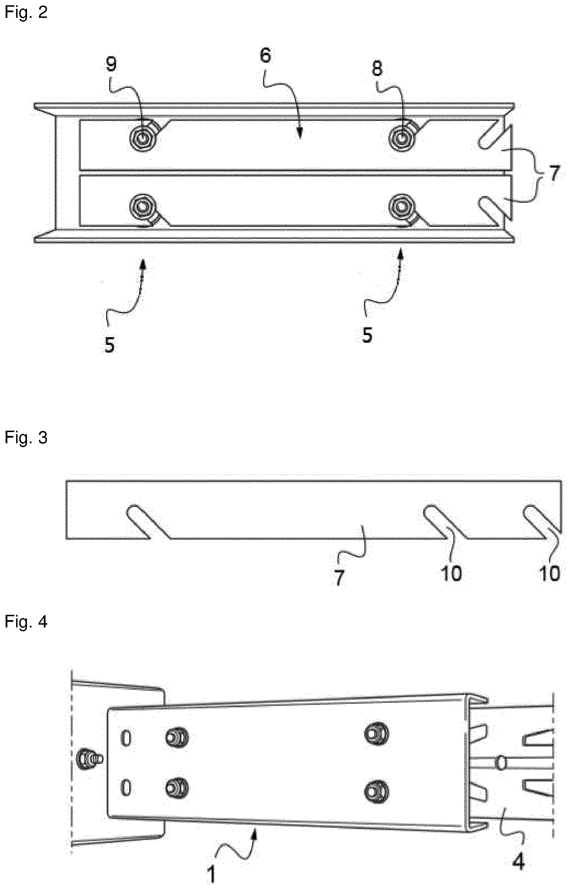

En se reportant aux figures 1 et 2, représentant un mode de réalisation avantageux, on voit que le dispositif de renforcement de rayonnages 1 comporte une structure profilée 2.

Dans l'exemple la section 3 de cette structure profilée 2 est sensiblement en U permettant de s'adapter à un montant 4 de section quadrangulaire, toutefois d'autres formes sont également envisageables et par exemple en forme de trapèze en fonction de la géométrie du montant 4 sur lequel sera fixé le dispositif de renforcement 1.

La section 3 de la structure 2 est destinée à venir enserrer le montant 4 pour permettre le redressement et/ou le renfort dudit montant 4.

De manière connue, on insère des moyens de fixation 5, notamment sous forme de vis et écrous, entre la structure 2 et le montant 4, pour assurer la liaison de la structure 2 sur le montant 4 et venir renforcer ce dernier.

En cas d'endommagement du montant 4 l'opération d'assujettissement entre la structure 2 et le montant 4 peut-être réalisée après redressement préalable du montant 4 ou en venant insérer en force les moyens de fixation 5, la fixation entraînant le redressement du montant 4 contre la structure 2. Eventuellement des percements sont réalisés sur le montant 4 si ce dernier n'en comporte pas dans la section à redresser. Selon l'invention, en plus des moyens de fixation 5 au montant 4, le dispositif de renforcement 1 comporte des moyens de répartition de charge 6. Ces moyens de répartition de charge 6 permettent de limiter les efforts de charge au niveau des zones de fixation sur le montant 4 en les répartissant sur la longueur de la languette 7.

En se reportant cette fois plus particulièrement aux figures 2 et 3, on voit que les moyens de répartition de charge 6 comportent au moins une languette 7. Plus précisément dans l'exemple on retrouve deux languettes 7 disposés côte à côte. D'une manière générale on prévoit avantageusement que les moyens de répartition 6 comportent une languette 7 pour chaque colonne de tiges de liaison 8. Toutefois, il est également envisageable en variante de réalisation d'avoir une languette 7 positionnée sur plusieurs colonnes.

Chaque la languette 7 permet une liaison mécanique entre les tiges de liaison 8 des moyens de fixation 5, les tiges 8 étant constituées, dans l'exemple de réalisation des figures annexées, de vis coopérant avec des écrous 9 qui seront disposés au niveau des montants 4.

Notons à ce sujet que d'autres types de tiges de liaison sont également envisageable et par exemple, dans un autre mode de réalisation, les tiges de liaison 8 pourront être des tiges de rivets assurant la fixation sur le montant 4.

Tel que visible à la figure 3, la languette 7 comprend une pluralité de fentes latérales 10. Ces fentes latérales 10 assurent et facilitent le positionnement par glissement de la languette 7 sur les tiges de liaison 8. Une fois les tiges de liaison 8 mises en place sur la structure 2, un opérateur vient positionner la languette 7 avec les ouvertures 11 des fentes latérales 10 au niveau des tiges de liaison 8 puis vient glisser la languette 7 dont la fente 10 est guidée par la tige 8 située à proximité, jusqu'au fond de la fente 10

Les fentes latérales 10 sont inclinées vers le haut à partir de leur ouverture 11 permettant un glissement par gravité jusqu'au contact entre le fond de chaque fente 10 et de chaque tige de liaison 8.

De manière avantageuse on prévoit un dimensionnement des fentes latérales 10 supérieur au diamètre des tiges de liaison 8 assurant un léger jeu de manière à tenir compte des variations d'écart entre deux tiges 8 consécutives et également du déplacement possible des tiges de liaison lors du serrage du dispositif de renforcement 1 contre le montant 4.

Dans l'exemple des figures annexés, les languettes 7 du dispositif de renforcement 1 comportent un nombre de fentes 10 supérieur au nombre de tiges de liaison 8, ces fentes latérales additionnelles permettant une adaptation à différentes configurations de placement des tiges de liaison 8 en fonction des possibilités de montage sur le montant 4.

Le dispositif de renforcement 1, équipé de moyens de répartition de charge 6, permet, lorsqu'un choc est localisé à l'emplacement d'une tige de liaison 8, de répartir cette charge sur toute languette 7. Lors du choc, une partie de la charge est dissipée dans la languette 7 elle-même le reste de la charge étant distribué sur l'ensemble des tiges de liaison 8 lié à cette même languette 7.

De cette manière la transmission de charge sur le montant 4 en plus d'être réduite par rapport au dispositif de renforcement 1 sans moyens de répartition de charge 6, n'est plus circonscrite à la seule zone de fixation de la tige de liaison encaissant le choc mais repartie sur sensiblement la longueur du montant 4 correspondant à celle de la languette 7.

De manière avantageuse, pour favoriser la dissipation de la charge dans la languette 7 et également la répartition sur la longueur de cette dernière, on prévoit que la languette 7 soit flexible. Avantageusement la languette 7 est en réalisée pour des impératifs de résistance, en acier.

Différentes géométries sont envisageables pour la réalisation de la languette 7, cela étant, comme représenté à la figure 3, cette languette 7 a, de préférence, une forme sensiblement rectangulaire et une épaisseur comprise entre 2 et 10mn.

Comme représenté à la figure 4, le dispositif de renforcement 1, une fois positionné sur le montant 4 permet de protéger efficacement le montant 4 des chocs directs. Par ailleurs le dispositif 1 augmente la résistance mécanique du montant 4 et donc du rayonnage dont il fait partie intégrante. Enfin les moyens de répartition de charge permettent de répartir, en cas d'éventuels impacts sur le dispositif 1, le transfert de la charge dû à l'impact sur une zone élargie du montant 4 permettant de mieux absorber cet impact et de ne pas fragiliser une zone très localisée dudit montant 4.

## Revendications

1. Dispositif de renforcement de rayonnages notamment destiné au renforcement mécanique d'un montant (4) de rayonnage à équiper, le dispositif de renforcement comportant une structure profilée (2) apte à permettre le renfort dudit montant (4), le dispositif de renforcement comprenant des moyens de fixation (5), avec des tiges de liaison, au montant (4) et des moyens de répartition de charge (6), lesdits moyens de répartition de la charge étant liés mécaniquement aux tiges de liaison et aptes à être positionnés entre le profilé (2) et le montant (4), pour limiter les efforts de charge au niveau des zones de fixation sur le montant (4),
les moyens de répartition comportant au moins une languette (7) permettant une liaison mécanique entre les tiges de liaison (8) des moyens de fixation (5),
**caractérisé en ce que**
la languette comprend une pluralité de fentes latérales (10) pour le positionnement par glissement sur les tiges de liaison (8),
les fentes latérales (10) étant inclinées vers le haut à partir de leur ouverture (11) permettant un glissement par gravité jusqu'au contact entre les fonds des fentes latérales (10) et les tiges de liaison (8).

2. Dispositif de renforcement selon la revendication 1 dans lequel les moyens de répartition de charge (6) comportent une languette (7) pour chaque colonne de tiges de liaison (8).

3. Dispositif de renforcement selon les revendications 1 ou 2 comportant des fentes latérales additionnelles permettant une adaptation à différentes configurations de placement des tiges de liaison (8).

4. Dispositif de renforcement selon l'une quelconque des revendications 1 à 3 dans lequel ladite au moins une languette (7) est flexible.

5. Dispositif de renforcement selon l'une quelconque des revendications 1 à 3 dans lequel ladite au moins une languette (7) est en acier.

6. Dispositif de renforcement selon l'une quelconque des revendications 1 à 3 dans lequel ladite au moins une languette (7) a une forme sensiblement rectangulaire et une épaisseur comprise entre 2 et 10mm.

## Patentansprüche

1. Verstärkungsvorrichtung für Regale, insbesondere zur mechanischen Verstärkung eines auszurüstenden Pfostens (4) eines Regals bestimmt, wobei die Verstärkungsvorrichtung eine profilierte Struktur (2) beinhaltet, die geeignet ist, die Verstärkung des Pfostens (4) zu ermöglichen, wobei die Verstärkungsvorrichtung Mittel zur Befestigung (5), mit Verbindungsstäben, am Pfosten (4) umfasst, und Lastverteilungsmittel (6), wobei die Lastverteilungsmittel mechanisch mit den Verbindungsstäben verbunden sind und geeignet sind, zwischen dem Profil (2) und dem Pfosten (4) positioniert zu werden, um die Lastbeanspruchungen im Bereich der Zonen der Befestigung am Pfosten (4) zu begrenzen,
wobei die Verteilungsmittel mindestens eine Lasche (7) beinhalten, die eine mechanische Verbindung zwischen den Verbindungsstäben (8) der Befestigungsmittel (5) ermöglicht,
**dadurch gekennzeichnet, dass** die Lasche eine Vielzahl von seitlichen Schlitzen (10) für die Positionierung durch Gleiten auf den Verbindungsstäben (8) umfasst,
wobei die seitlichen Schlitze (10) von ihrer Öffnung (11) ausgehend nach oben geneigt sind, um ein Gleiten durch die Schwerkraft zu ermöglichen, bis zum Kontakt zwischen dem Boden der seitlichen Schlitze (10) und den Verbindungsstäben (8).

2. Verstärkungsvorrichtung nach Anspruch 1, wobei die Lastverteilungsmittel (6) eine Lasche (7) für jede Säule von Verbindungsstäben (8) beinhalten.

3. Verstärkungsvorrichtung nach Anspruch 1 oder 2, zusätzliche seitliche Schlitze beinhaltend, die eine Anpassung an verschiedene Platzierungskonfigurationen der Verbindungsstäbe (8) ermöglichen.

4. Verstärkungsvorrichtung nach einem der Ansprüche 1 bis 3, wobei die mindestens eine Lasche (7) flexibel ist.

5. Verstärkungsvorrichtung nach einem der Ansprüche 1 bis 3, wobei die mindestens eine Lasche (7) aus Stahl besteht.

6. Verstärkungsvorrichtung nach einem der Ansprüche 1 bis 3, wobei die mindestens eine Lasche (7) eine im Wesentlichen rechteckige Form und eine Dicke zwischen 2 und 10 mm aufweist.

## Claims

1. A device for reinforcing shelving, in particular intended for mechanical reinforcement of a shelving upright (4) of to be equipped, the reinforcement device including a profiled structure (2) capable of allowing the reinforcement of said upright (4), the reinforcement device comprising means (5) for fastening, with connecting rods, to the upright (4) and load distribution means (6), said load distribution means being mechanically connected to the connecting rods and capable of being positioned between the profile (2) and the upright (4), in order to limit the load forces at the fastening zones on the upright (4),
the distribution means including at least one tab (7) allowing a mechanical connection between the connecting rods (8) of the fastening means (5),
**characterised in that** the tab comprises a plurality of lateral slots (10) for slidably positioning on the connecting rods (8),
the lateral slots (10) being inclined upwards from their opening (11) allowing a gravitational sliding until contact between the bottoms of the lateral slots (10) and the connecting rods (8).

2. The reinforcement device according to claim 1, wherein the load distribution means (6) include a tab (7) for each column of connecting rods (8).

3. The reinforcement device according to claims 1 or 2, including additional lateral slots allowing an adaptation to different placement configurations of the connecting rods (8).

4. The reinforcement device according to any one of claims 1 to 3, wherein said at least one tab (7) is flexible.

5. The reinforcement device according to any one of claims 1 to 3, wherein said at least one tab (7) is made of steel.

6. The reinforcement device according to any one of claims 1 to 3, wherein said at least one tab (7) has a substantially rectangular shape and a thickness comprised between 2 and 10mm.
